# EUROPÄISCHE PATENTSCHRIFT

(11) **EP 3 323 582 B1**
(45) Veröffentlichungstag und Bekanntmachung des Hinweises auf die Patenterteilung: **26.12.2018**
(21) Anmeldenummer: 16199999.0
(22) Anmeldetag: 22.11.2016
(51) Int. Cl.: B29C 45/00, F01N 13/18

(54) **VERFAHREN ZUR HERSTELLUNG EINES BEHÄLTERS**
METHOD FOR PRODUCING A CONTAINER
PROCÉDÉ DE FABRICATION D'UN RÉCIPIENT

(43) Veröffentlichungstag der Anmeldung: 23.05.2018
(73) Patentinhaber: Adval Tech Holding AG, 3172 Niederwangen (CH)
(72) Erfinder: GÖBEL, Markus, 6280 Hochdorf (CH)
(74) Vertreter: Bremi, Tobias Hans

(56) Entgegenhaltungen:
- DE-A1- 4 126 041
- DE-A1- 19 852 553
- DE-U1-202011 000 201
- FR-A1- 2 848 496
- JP-A- H04 246 520
- JP-A- H06 182 806
- JP-A- H06 246 781
- JP-A- 2001 038 768
- JP-A- 2001 272 109
- US-A- 6 117 380
- US-A1- 2006 118 358
- US-A1- 2007 210 469
- US-A1- 2015 258 887

## Beschreibung

### TECHNISCHES GEBIET

Die vorliegende Erfindung betrifft ein Verfahren zur Herstellung eines Behälters, insbesondere als Flüssigkeitsbehälter im Automobilbereich, sowie ein Werkzeug zur Herstellung eines derartigen Behälters.

### STAND DER TECHNIK

Behälter, die keiner besonderen Druckbelastung standhalten müssen, und die vergleichsweise frei gestaltet werden müssen, können in einem Blasformverfahren hergestellt werden. Dieses Verfahren ist aber nicht besonders flexibel was die Gestaltungsmöglichkeiten angeht, weshalb, beispielsweise im Fahrzeugbereich für Behälter für Flüssigkeiten und Gase, in der Regel Behälter aus zwei Halbschalen aufgebaut werden. Die zwei Halbschalen werden individuell in jeweils einem Spritzgussprozess aus einem thermoplastischen Kunststoff gefertigt und anschliessend werden die Halbschalen miteinander verschweisst. Letzteres kann beispielsweise in einem Heizspiegel-Verfahren erfolgen, wobei eine heisse Platte zwischen die beiden Halbschalen gelegt wird, sodass sich das thermoplastische Material im Randbereich verflüssigt oder wenigstens erweicht, anschliessend wird die heisse Platte geschwind aus dem Zwischenraum gezogen und die beiden Halbschalen aufeinander gepresst.

Problematisch an diesem Prozess ist einerseits die Tatsache, dass sie eine Vielzahl von unterschiedlichen Handling-Schritten der individuell hergestellten Komponenten erforderlich macht. Weiter gibt es bei derartig hergestellten Behältern Probleme mit dem Verzug und die Gestaltungsmöglichkeiten was die Form des Behälters angeht sind nicht sehr gross. Zu guter Letzt ist die mechanische Festigkeit und die Dichtigkeit der erzeugten Schweissnaht nicht ohne grossen Aufwand zuverlässig gewährleistbar.

Aus der DE-A-4126041 ist eine Spritzgießmaschine zum Spritzgießen hohler Kunststoffprodukte mit Hilfe eines Formen-Paares bekannt, wobei eine der Formen um ihre Mittellinie an einem Befestigungsrahmen der Maschine drehbar gelagert ist und wobei ferner jede der Formen wenigstens einen Satz hat, der aus einer Patrizen-Einzelform und zwei Matrizen-Einzelformen besteht, die jeweils auf den Formtrenn-Ebenen in gleichen Abständen von der Mittellinie und in gleichen Winkelabständen angebracht sind. Die verdrehbare Form wird zwischen einer ersten und einer zweiten Winkellage hin- und herverdreht, wobei bei einem ersten Spritzgießvorgang ein Paar von Produkthälften und beim zweiten Spritzvorgang gleichzeitig ein komplettes Produkt hergestellt werden. US-A-2015258887 beschreibt einen Kraftfahrzeugharnstofftank und ein Formgebungsverfahren dafür. Das Verfahren umfasst die folgenden Schritte: 1) Herstellen eines oberen Halbgehäuses und eines unteren Halbgehäuses durch ein Spritzgussverfahren; 2) nachdem das obere halbe Gehäuse und das untere halbe Gehäuse geformt sind, die Montage von Einbauten des oberen Halbgehäuses und des unteren Halbgehäuses; 3) Schweißen des zusammengebauten oberen Halbgehäuses und des zusammengebauten unteren Halbgehäuses zu einem Ganzen; und 4) Zusammenbau von Bauteilen auf Flächen des oberen Halbgehäuses und des unteren Halbgehäuses.

### DARSTELLUNG DER ERFINDUNG

Es ist entsprechend Aufgabe der Erfindung, ein verbessertes Herstellungsverfahren für Behälter, die aus einem thermoplastischen Kunststoff hergestellt sind, bereitzustellen. Weiter ist es Aufgabe, eine Spritzguss-Maschine bereitzustellen, die es erlaubt, ein derartiges Verfahren durchzuführen.

Entsprechend betrifft die vorliegende Erfindung gemäss einem ersten Aspekt ein Verfahren zur Herstellung eines im Wesentlichen geschlossenen Behälters zur Führung und/oder Aufbewahrung von Gasen und/oder Flüssigkeiten aus einem thermoplastischen Kunststoff, gemäß dem unabhängigen Anspruch 1.

Das Verfahren weist folgende Schritte auf, vorzugsweise in der vorgegebenen Reihenfolge:
1. in einer Spritzgussform mit einer ersten Form und einer zweiten Form, welche gemeinsam einer ersten Spritzguss-Position sowohl wenigstens eine Kavität für eine Oberschale als auch wenigstens eine Kavität für eine Unterschale bereitstellt, werden parallel wenigstens eine Oberschale und wenigstens eine Unterschale in einem Spritzgussverfahren hergestellt;
2. Öffnen der Spritzgussform, wobei die wenigstens eine Oberschale in der ersten Form verbleibt und die wenigstens eine Unterschale in der zweiten Form verbleibt;
3. Drehen wenigstens einer der beiden Formen, sodass die konkaven Innenseiten der Schalen gegeneinander gerichtet sind und Schliessen der Form zu einer zweiten Spritzguss-Position, sodass die im wesentlichen kongruenten Randbereiche der Schalen in wenigstens teilweise flächige Anlage kommen;
4. Einschiessen von Spritzgussmaterial in eine Kavität zwischen oder angrenzend an die Randbereiche unter Ausbildung einer umlaufenden Schweissnaht zwischen Oberteil und Unterteil;
5. Öffnen der Spritzgussform und Entnahme des wenigstens einen Behälters.

Durch die gleichzeitige Herstellung von Oberschale und Unterschale in der gleichen Form und die unmittelbar danach über die Drehung der Form ermöglichte Verbindung von Oberschale und Unterschale unter Verwendung der gleichen Form kann in einem extrem effizienten und stabilen Prozess mit grosser Positionier-Genauigkeit der Behälter hergestellt werden. Die Schweissnaht wird so ohne zwischengeschaltetes Handling von zuvor hergestelltem Oberschale und Unterschale im gleichen Werkzeug hergestellt, sodass eine mechanisch sehr stabile und dichte Verbindung zwischen den beiden Halbschalen gewährleistet ist. Vorzugsweise wird für die beiden Halbschalen und für die Schweissnaht das gleiche Material verwendet, sodass auch die Material Verwendung und Lagerung durch dieses Verfahren optimiert ist.

Erfindungsgemäß wird beim Verfahren eine Spritzgussform verwendet, welche eine gestufte Trennebene aufweist, zum Beispiel, wenn Oberschale und Unterschale nicht identisch ausgebildet sind. Unter einer gestuften Trennebene ist eine Trennebene der Form zu verstehen, bei welcher die Trennebene im Bereich der Form zur Herstellung der Oberschale der Form bei der ersten Spritzguss-Position bezogen auf die Schliessrichtung auf einer anderen Höhe liegt, als die Trennebene im Bereich der Form zur Herstellung der Unterschale. Dies so, dass verhindert wird, dass bei der zweiten Spritzguss-Position, während welcher die eine Hälfte der Form für die Herstellung der Oberschale gegenüber der einen Hälfte der Form für die Herstellung der Unterschale zu liegen kommt (namentlich jene Formbereiche gegenüber zu liegen kommen, in welchen die frisch hergestellte Oberschale respektive Unterschale beim Übergang von der ersten Spritzguss-Position zur zweiten Spritzguss-Position nicht verbleiben, mithin also leer sind, d. h. die konvexen Formbereiche), und diese beiden Formbereiche nicht aktiv sind, diese beiden nicht-aktiven Formbereiche nicht kollidieren. Konkret werden die beiden frisch hergestellten Halbschalen jeweils am Ende der ersten Spritzguss-Phase in jenem konkaven Bereich der jeweiligen Form gehalten, welcher die Aussenfläche der jeweiligen Halbschalen definiert. Mit anderen Worten wird der konvexe Bereich der jeweiligen Form, welche die Innenfläche der jeweiligen Halbschalen definiert, aus dem Innenraum der jeweiligen frisch hergestellten Halbschalen entnommen. Jene Bereiche der Form, welche die konkave Innenfläche der jeweiligen Halbschalen auf der Innenseite ausbilden, und ihrerseits als Formkontur konvex ausgebildet sind, sind in der zweiten Spritzguss-Position nicht aktiv, und dürfen entsprechend auch nicht kollidieren.

Wird beispielsweise eine Form mit einem Bereich für die Herstellung einer Oberschale und einem Bereich für die Herstellung einer Unterschale eingesetzt, und die eine Form jeweils beispielsweise um 180° gedreht für die zweite Spritzguss-Position, so wird vorzugsweise die Trennebene jenes Bereichs der Form für die Unterschale, in welchem die hergestellte Unterschale während der zweiten Spritzguss-Position verbleibt, so angeordnet, dass die Trennebene dieses Bereichs während der ersten Spritzguss-Position in Schliessrichtung weiter vorne angeordnet ist. Dies führt dazu, dass jener Bereich der Form für die Unterschale, in welchem die hergestellte Unterschale während der zweiten Spritzguss-Position nicht verbleibt, in Schliessrichtung genügend entfernt ist von jenem Bereich der Form für die Oberschale, in welchen die hergestellte Unterschale während der zweiten Spritzguss-Position nicht verbleibt.

Wegen der gestuften Trennebene in zwei verschiedenen Spritzguss-Positionen muss die entsprechende Form respektive die die Form tragende Spritzgussmaschine in der Lage sein, bei diesen zwei unterschiedlichen Positionen, d. h. auf zwei unterschiedlichen Höhen bezogen auf die Fliessrichtung, die erforderliche Schliesskraft aufzubauen. In den beiden Positionen, d. h. in der Position, in welcher die erste Spritzguss-Position eingenommen wird, und in der Position, in welcher die zweite Spritzguss-Position eingenommen wird, sollte die Maschine jeweils in der Lage sein die erforderliche hohe Schliesskraft aufzubauen. Typischerweise ist eine Schliesskraft von mindestens 200 t, vorzugsweise von mindestens 500 t erforderlich. In vielen Fällen sind Schliesskräfte von 600-3000 t für die Spritzguss-Prozesse notwendig. Die Maschine sollte entsprechend in der Lage sein, während des Verfahrens in beiden Positionen derartige Schliesskräfte aufzubringen.

Das Verfahrens ist entsprechend dadurch gekennzeichnet, dass die Position der ersten Form relativ zur zweiten Form in Schliessrichtung betrachtet in der ersten Spritzguss-Position auf einer anderen Höhe angeordnet ist als in der zweiten Spritzguss-Position, und dass vorzugsweise sowohl während der ersten Spritzguss-Position als auch während der zweiten Spritzguss-Position eine Schliesskraft im Bereich von 300-3000 t, vorzugsweise im Bereich von 400-2000 t, insbesondere im Bereich von 500-1000 t aufgebaut wird.

Auf diese Schrittfolge kann im Sinne einer zyklischen Durchführung des Verfahrens folgender Schritt folgen:
6. Drehen wenigstens einer der beiden Formen, sodass wiederum eine erste Spritzguss-Position eingenommen wird, welche wenigstens eine Kavität für eine Oberschale als auch wenigstens eine Kavität für eine Unterschale bereitstellt, und zyklische Wiederholung der Schrittfolge zur Herstellung einer Mehrzahl von Behältern.

Dabei ist vorzugsweise die Spritzgussform zur gleichzeitigen Herstellung von einem Behälter ausgelegt. In diesem Fall erfolgt die Drehung einer der beiden Formen um 180°. Es ist aber auch möglich, eine Vielzahl von solchen Prozessen in der gleichen Form durchzuführen, so ist es möglich, die Spritzgussform zur gleichzeitigen Herstellung von n Behältern auszulegen, und die Drehung einer der beiden Formen erfolgt dann um einen Winkel von 360°/2n. Die verschiedenen Formen sind so um den Umfang verteilt. Weiter ist es auch möglich mehrere Formen radial nebeneinander anzuordnen, welche Drehsymmetrie und Drehungen dann erforderlich sind erschliesst sich dem Fachmann mit dem allgemeinen Fachwissen.

Gemäss einer ersten bevorzugten Ausführungsform verfügen Oberteil und Unterteil jeweils über eine konkave Innenseite und eine konvexe Aussenseite.

Gemäss einer weiteren bevorzugten Ausführungsform verfügen die Randbereiche von Oberteil und Unterteil jeweils über einen umlaufenden, vorzugsweise nach aussen gerichteten Flansch.

In der dem jeweils anderen Flansch zugewandten Kontaktfläche wenigstens eines der Flansche, vorzugsweise beider Flansche, ist vorzugsweise eine umlaufende Rinne vorgesehen, sodass sich bei flächiger Anlage der Flansche von Oberteil und Unterteil ein Hohlraum bildet, in welchen im Rahmen der zweiten Spritzguss-Position thermoplastischer Kunststoff unter Ausbildung der Schweissnaht eingespritzt wird. Mit anderen Worten wird zwischen den Flanschen gewissermassen eine Kavität für den Spritzguss-Prozess in der zweiten Spritzguss-Position bereitgestellt.

Die wenigstens eine Rinne, vorzugsweise beide Rinnen, verfügen Bevorzugtermassen über einen im Wesentlichen halbkreisförmigen, rechteckigen, 3-eckigen oder trapezförmigen Querschnitt.

In wenigstens einem der Flansche, vorzugsweise in beiden Flanschen wenigstens eine Ausnehmung und/oder Loch, vorzugsweise eine Vielzahl von bevorzugt über den Umlauf verteilten Ausnehmungen und/oder Löchern vorgesehen sein gemäss einer weiteren bevorzugten Ausführungsform, sodass sich eine Schweissnaht mit wenigstens einem Zapfen ausbildet. So kann neben dem Stoffschluss zwischen Schweissnaht und entsprechender Halbschalen auch noch ein Formschluss bereitgestellt werden, was die mechanische Festigkeit der Schweissverbindung weiter erhöht. Die Löcher und die dadurch ausgebildeten Zapfen der Schweissnaht haben den weiteren sehr wesentlichen Vorteil, dass, insbesondere wenn das Material für die Herstellung der Schweissnaht hinsichtlich Einfärbung anders gewählt wird als das Material von Unterschale und/oder Oberschale, visuell sehr einfach die Qualität der Schweissnaht überprüft werden kann. Die Zapfen führen also weiterhin dazu, dass das Qualitätsmanagement wesentlich vereinfacht wird, wenn beispielsweise als Material für die Halbschalen ein schwarzes Material oder eingefärbtes Material eingesetzt wird und als Material für die Schweissnaht ein nicht eingefärbtes Material oder eben ein einfach anders eingefärbtes Material als das Material der Halbschalen.

Wenigstens eine der Formen kann bevorzugtermassen so ausgebildet werden, dass sich in den Innenraum des Behälters ragende Schwallwände ausbilden, wobei vorzugsweise diese Schwallwände Löcher aufweisen, welche insbesondere vorzugsweise über wenigstens einen Schrägschieber in wenigstens einer der Formen realisiert werden. Die Schwallwände können dabei unterschiedliche Formen aufweisen, beispielsweise wellenförmig ausgebildet sein oder abschnittsweise L-förmig oder hakenförmig.

An dem wenigstens einen Schrägschieber kann zur Ausbildung von Schwallwänden mit Löchern oder auch Vertiefungen eine hervorstehende Kontur ausgebildet sein, und der Schrägschieber kann zur Freigabe des ausgebildeten Bauteils seitlich unter Freigabe der durch die Kontur erzeugten Vertiefung oder des durch die Kontur erzeugten Loches im gespritzten Bauteil verschoben werden.

Ein weiteres Bauelement, vorzugsweise in Form einer Dosiereinheit kann in diesem vorgeschlagenen Prozess nach der Herstellung des Behälters oder vorzugsweise während der Herstellung des Behälters mit dem Behälter verbunden werden, wobei vorzugsweise diese Verbindung über eine Adapterplatte erfolgen kann oder direkt.

Die Dosiereinheit kann so beispielsweise gegebenenfalls nach vorgängiger Befestigung einer Adapterplatte an der Dosiereinheit in die Form vor Einnahme der ersten Spritzguss-Position eingelegt werden, und bei Ausbildung der entsprechenden Halbschale mit dem Material der Halbschale unter Ausbildung einer dichten Verbindung zwischen Dosiereinheit und Halbschale respektive gegebenenfalls Adapterplatte und Halbschale umspritzt werden.

Gemäss einer bevorzugten Ausführungsform handelt es sich beim thermoplastischen Material wenigstens einer der Schalen und/oder der Schweissnaht, vorzugsweise beim thermoplastischen Material der beiden Schalen und der Schweissnaht, um ein Polyolefin-Material, vorzugsweise um ein Polyolefin-Material mit hoher Dichte von vorzugsweise mindestens 0.94g/cm3, vorzugsweise um HD-PE.

Beim Öffnen der Spritzgussform nach der Herstellung der beiden Schalen, verbleibt die wenigstens eine Oberschale in der ersten Form und die wenigstens eine Unterschale in der zweiten Form. Dieser Verbleib der jeweiligen Schale in der entsprechenden Form kann durch Auswerfer und/oder Hinterschnitte gewährleistet werden.

Gemäss einem weiteren Aspekt umfasst die vorliegende Erfindung ein Werkzeug zur Durchführung eines Verfahrens, wie es oben beschrieben wurde. Das Werkzeug, gemäß dem unabhängigen Anspruch 12, weist eine Spritzgussform mit einer ersten Form und einer zweiten Form auf, welche gemeinsam einer ersten Spritzguss-Position mit der erforderlichen Schliesskraft sowohl wenigstens eine Kavität für eine Oberschale als auch wenigstens eine Kavität für eine Unterschale bereitstellt, und die parallele Herstellung wenigstens eine Oberschale und wenigstens eine Unterschale in einem Spritzgussverfahren ermöglicht. Weiter kann bei diesem Werkzeug die Spritzgussform anschliessend geöffnet werden, wobei die wenigstens eine Oberschale in der ersten Form verbleibt und die wenigstens eine Unterschale in der zweiten Form verbleibt. Zudem ist bei diesem Werkzeug wenigstens einer der beiden Formen drehbar gelagert, sodass die konkaven Innenseiten der Schalen gegeneinander gerichtet werden können und die Form anschliessend zu einer zweiten Spritzguss-Position geschlossen werden kann, sodass die im wesentlichen kongruenten Randbereiche der Schalen, typischerweise in Form von kongruenten, nach aussen gerichteten Flanschen, in wenigstens teilweise flächige Anlage kommen. Anschliessend kann in diesem Werkzeug Spritzgussmaterial bei Anlegen der erforderlichen Schliesskraft in eine Kavität zwischen oder angrenzend an die Randbereiche unter Ausbildung einer umlaufenden Schweissnaht zwischen Oberteil und Unterteil eingeschossen werden. Weiter kann bei diesem Werkzeug die Spritzgussform dann wieder geöffnet und der wenigstens eine Behälter entnommen werden, und die gedrehte Form kann dann entweder in die ursprüngliche erste Spritzguss-Position zurückgedreht oder weitergedreht werden. Erfindungsgemäß ist die Trennebene der ersten Form relativ zur Trennebene der zweiten Form in Schliessrichtung betrachtet in der ersten Spritzguss-Position auf einer anderen Höhe angeordnet als in der zweiten Spritzguss-Position.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: einen erfindungsgemäss hergestellten Behälter in verschiedenen Ansichten, namentlich in a) in einer Ansicht von oben, in b) in einer Ansicht von unten, in c)-f) in den 4 Seitenansichten und in g) in einer perspektivischen Ansicht von schräg oben;
- Fig. 2: den Behälter gemäss Fig. 1 in einer Explosionsdarstellung;
- Fig. 3: Darstellung betreffend Schweissnaht des Behälters, wobei in a) eine Aufsicht des Behälters und in b) eine Seitenansicht des Behälters mit dem in c) dargestellten Schnittbereich mit transparentem Oberteil angegeben ist und in d) das Detail a aus Figur a) von oben und in e) das Detail a aus Figur a) von unten;
- Fig. 4: die verschiedenen Produktionsschritte hinsichtlich Werkzeugstellung in einer Übersichtsdarstellung;
- Fig. 5: in a) - k) die verschiedenen Produktionszustände 4.1-4.10;
- Fig. 6: eine Darstellung der Details der Befestigung der Dosiereinheit über die Adapterplatte an der Unterschale, wobei in a) und b) eine Sicht von unten respektive ein Schnitt entlang A-A des gesamten Behälters dargestellt ist, in c) eine perspektivische Schnittdarstellung durch den Befestigungsbereich, in d) eine Sicht von der Innenseite des Behälters auf die befestigte Dosiereinheit und die Adapterplatte und in e) eine Sicht von der Aussenseite von unten auf die befestigte Dosiereinheit und die Adapterplatte;
- Fig. 7: die verschiedenen Produktionsschritte hinsichtlich Elemente des Behälters in einer Übersichtsdarstellung;
- Fig. 8: in der oberen Reihe die verschiedenen Seitenansichten des Behälters mit der Trennlinie in einer Ebene; in der unteren Reihe die verschiedenen Seitenansichten des Behälters mit gestrichelten alternativen Trennlinien zwischen Oberschale und Unterschale;
- Fig. 9: verschiedene Illustrationen von Schwallwänden, wobei in a) der Behälter in perspektivischer Ansicht transparent dargestellt ist, in b) die Anordnung von Schwallwänden auf der Innenseite der Deckfläche der Oberschale, in c) die Anordnung von Schwallwänden auf der Innenseite der Bodenfläche der Unterschale, in d) Schwallwände in gewellter Ausführung mit Löchern und in e) hakenförmige abschnittsweise ausgebildete Schwallwände.

### BESCHREIBUNG BEVORZUGTER AUSFÜHRUNGSFORMEN

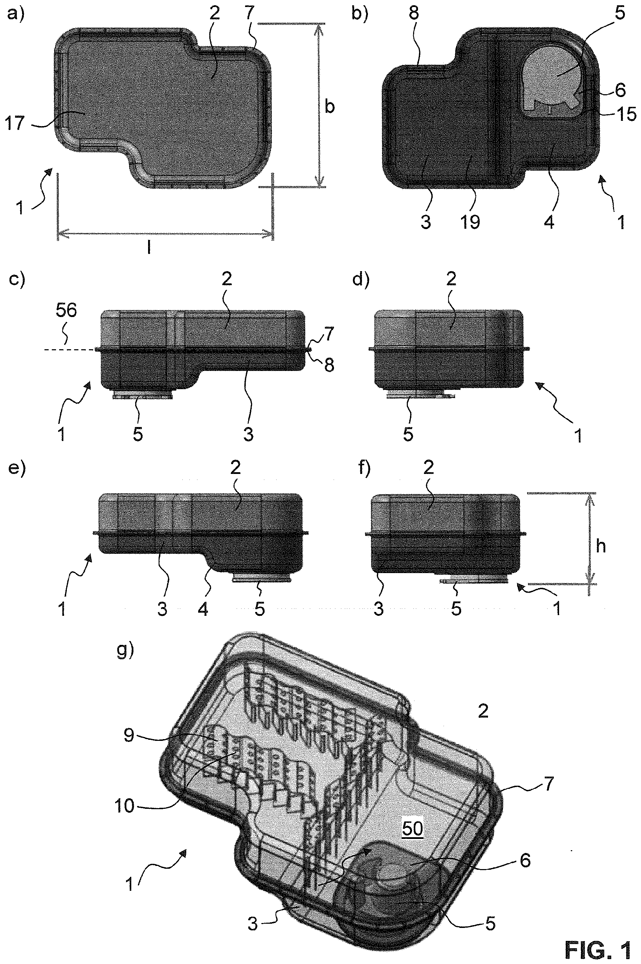

Ein nach dem erfindungsgemässen Verfahren hergestellter Behälter ist in Figur 1 in unterschiedlichen Ansichten dargestellt, in a) von oben, in b) von unten, in c)-f) von der Seite, und in g) in einer perspektivischen Ansicht, wobei in g) die Wände von Oberschale und Unterschale transparent dargestellt sind.

Der Behälter 1 wird gebildet durch eine Oberschale 2 und eine Unterschale 3, welche an einer planen Trennebene 56, welche gewissermassen horizontal verläuft, aneinander grenzen. Bei dieser Trennebene verfügt die Oberschale 2 über einen umlaufenden Flansch 7 und die Unterschale 3 über einen korrespondierenden umlaufenden Flansch 8. Die beiden Halbschalen schliessen einen im Wesentlichen geschlossenen Hohlraum 50 ein.

Die Deckfläche 17 der Oberschale 2 ist im Wesentlichen als eine Ebene ausgebildet, während die Bodenfläche 19 der Unterschale 3 gestuft ausgebildet ist. Konkret gibt es in der Unterschale 3 einen abgesenkten Bereich 4, welcher tiefer liegt, und in welchem ein Loch 15 vorgesehen ist. In diesem Loch 15 ist eine Dosiereinheit 5 angeordnet, wobei diese Dosiereinheit 5 über eine Adapterplatte 6 an der Unterschale 3 dicht befestigt ist, worauf weiter unten zurückzukommen sein wird.

Ein derartiger Behälter hat ungefähr eine Länge von 550 mm und eine Breite von circa 450 mm. Seine Höhe ist im Bereich von circa 250 mm, und ein solcher Behälter kann beispielsweise im Automobilbereich für die Aufbewahrung von Flüssigkeiten verwendet werden, so insbesondere für die Aufbewahrung von Harnstoff bei Dieselkraftfahrzeugen. Die einzelnen Halbschalen werden in einem Spritzgussverfahren aus einem thermoplastischen Kunststoff, hier namentlich HD-PE in einem mehrstufigen Spritzgussverfahren hergestellt, wie dies weiter unten erläutert werden wird.

Im Innenraum 50 des Behälters sind sogenannte Schwallwände 9 angeordnet, und zwar sowohl aufragend in den Innenraum 50 von der Deckfläche 17 der Oberschale als auch von der Bodenfläche 19 der Unterschale 3 in den Innenraum 50. Diese Schwallwände 9 verhindern, dass die Flüssigkeit, die sich im Behälterinnern 50 befindet, bei Bewegung des Behälters zu sehr durcheinandergeschüttelt wird, und insbesondere unangenehme Geräusche erzeugt werden.

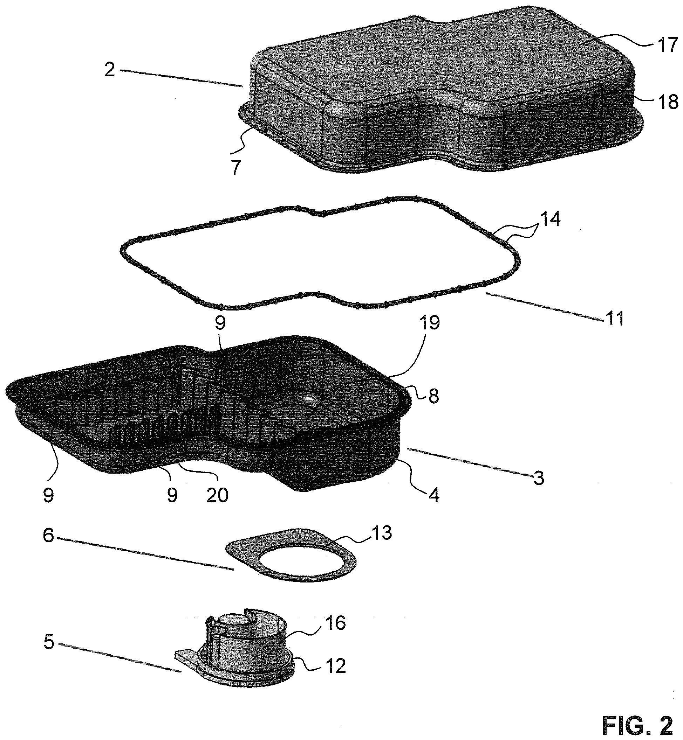

Die Figur 2 ist der erfindungsgemäss hergestellte Behälter in einer Explosionsdarstellung widergegeben. Hier ist erkennbar, wie die Dosiereinheit 5 über in den Behälter hineinragende Bereiche 16 verfügt, diese Dosiereinheit kann sogar mit spezifischen Funktionseinheiten wie Ventilen oder sogar Steuerungselementen und Elektronik ausgestaltet sein. Die Dosiereinheit 15 verfügt über eine umlaufende axiale Rippe 12, die gewissermassen einen Hohlzylinder bildet, welche Rippe 12 dann, wie weiter unten erläutert werden wird, an der Adapterplatte 6, konkret in einem Loch 13 der Adapterplatte 6 oder angrenzend an diese, befestigt wird. Die Bereiche 16 ragen dabei durch die Ausnehmung 13 der Adapterplatte 6 hindurch in den Innenraum 50 des Behälters 1.

Wie ebenfalls erkannt werden kann, verfügt die Oberschale 2 über eine Deckfläche 17, von welcher umlaufend eine Wand 18 nach unten ausgebildet ist, und an deren unterem Rand der genannte Flansch 7 umlaufend ausgebildet ist. Der Flansch 7 verfügt über regelmässig über seine umlaufende Länge verteilte Löcher, auf welche ebenfalls später zurückzukommen sein wird.

Gleichermassen verfügt die Unterschale 3 über eine umlaufende geschlossene Wand 20, an deren Oberkante der genannte Flansch 8 ausgebildet ist. Auch in diesem Flansch 8 gibt es über seine umlaufende Länge verteilte Löcher.

In einer umlaufenden Nut 24/25 von Flansch 7 respektive Flansch 8 im jeweiligen Kontaktbereich zur korrespondierenden Gegenschale ist eine Behälter-Schweissnaht 11 aus dem gleichen Material wie die beiden Schalen 2, 3 ausgebildet. Da sowohl Flansch 7 als auch Flansch 8 über Löcher verfügen, verfügt diese Behälter-Schweissnaht über eine entsprechende Zahl von senkrecht zur Hauptebene der Schweissnaht gerichtete Zapfen 14, die dazu führen, dass neben dem durch die Schweissnaht 11 erzeugten Stoffschluss auch noch ein Formschluss in gewissem Umfang zwischen den beiden Halbschalen 2 und 3 bereitgestellt wird. Zudem führt diese Ausgestaltung von den Flanschen 7, 8 dazu, dass das Material, das als Behälter-Schweissnaht 11 eingespritzt wird, im Spritzgussprozess möglichst homogen im entsprechenden umlaufenden Hohlraum gebildet durch die Nuten 24/25 verteilt wird.

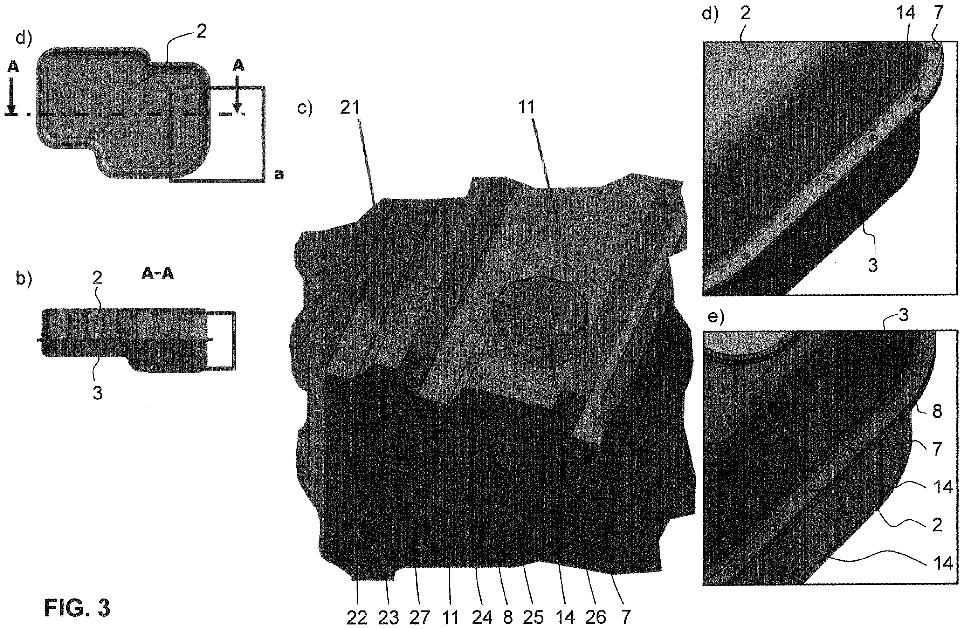

Die Ausgestaltung der Schweissnaht 11 im Bereich der aneinandergrenzenden Flansche 7, 8 ist in Figur 3 spezifisch dargestellt. Hier kann erkannt werden, dass der Flansch 7 des Oberteils 2 auf seiner unteren, der Unterschale 3 respektive dem Flansch 8 der Unterschale 3 zugewandten ebenen Flächenbereich über eine umlaufende Rinne 25 verfügt. Gleichermassen verfügt der Flansch 8 des Unterteils 3 seinerseits über eine umlaufende Rinne 24 auf seiner dem Oberteil 2 zugewandten Oberfläche. Diese Rinnen werden zur Aussenseite hin begrenzt durch einen aussenliegenden Kontaktbereich 26, bei welchem die beiden Flansche 7, 8 direkt aneinandergrenzen, und über einen innenliegenden Kontaktbereich 27, wo ebenfalls die beiden Flansche 7, 8 direkt aufeinanderliegen. So bildet sich, wenn die beiden separat gespritzten Schalen 2, 3 korrekt aufeinander gelegt werden, sodass die Flächen der Flansche aufeinander zu liegen kommen, zwischen den beiden Flanschen 7, 8 in Folge der beiden korrespondierenden Rinnen 24, 25 eine umlaufende Kavität, in welche, wie weiter unten dargelegt werden wird, das Material für die Behälter-Schweissnaht 11 direkt eingespritzt werden kann. Damit dieser Vorgang des Einspritzen in diese Kavität gebildet durch die Rinnen 24/25 möglichst optimal verläuft, das heisst, sowohl die mechanische Festigkeit, als auch die Dichtigkeit durch die Dichtung 11 gewährleistet werden kann, ist in diesem Fall auf der der Behälterinnenseite zugewandten Seite der jeweiligen Flansche 7, 8 gewissermassen eine Labyrinthdichtung ausgebildet. Konkret verfügt der Flansch 8 der Unterschale 3 über einen umlaufenden Kamm 22 und der Flansch 7 der Oberschale 2 über eine korrespondierende umlaufende Nut 23. Nut 23 des Flansches der Oberschale und Kamm 22 des Flansches der Unterschale greifen durch flächige Anlagen ineinander und bilden so eine dichte und auch dem Spritzgussprozess der Schweissnaht standhaltende Begrenzung der für die Ausbildung der Schweissnaht 22 bereitgestellten Kavität (im Sinne einer Nut/Feder-Verbindung).

Wie oben bereits erwähnt verfügen die beiden Flansche 7, 8 über senkrecht zur Ebene der Flansche ausgebildete, über die umlaufende Länge der Flansche 7, 8 verteilte Löcher. In diesen Löchern wird beim Spritzen der Schweissnaht 11 jeweils ebenfalls Spritzgussmaterial eingetragen, worauf sich eine Mehrzahl von Zapfen 14 bildet. Diese Ausgestaltung der Flansche mit den Löchern hat einerseits den Vorteil, dass dadurch das in üblicherweise in 3-4 Spritzgusspunkten um den Umlauf des Flansches verteilten Einspritzpunkten eingeführte Spritzgussmaterial sich möglichst gut um den ganzen Umfang herum verteilen kann, und dass dadurch eine optimale mechanische Festigkeit und Dichtigkeit gewährleistet wird. Weiter führt dies aber auch dazu, dass neben dem reinen Stoffschluss ein wesentlicher Beitrag durch einen Formschluss zwischen der jeweiligen Schale und dem Material der Schweissnaht 11 bereitgestellt werden kann.

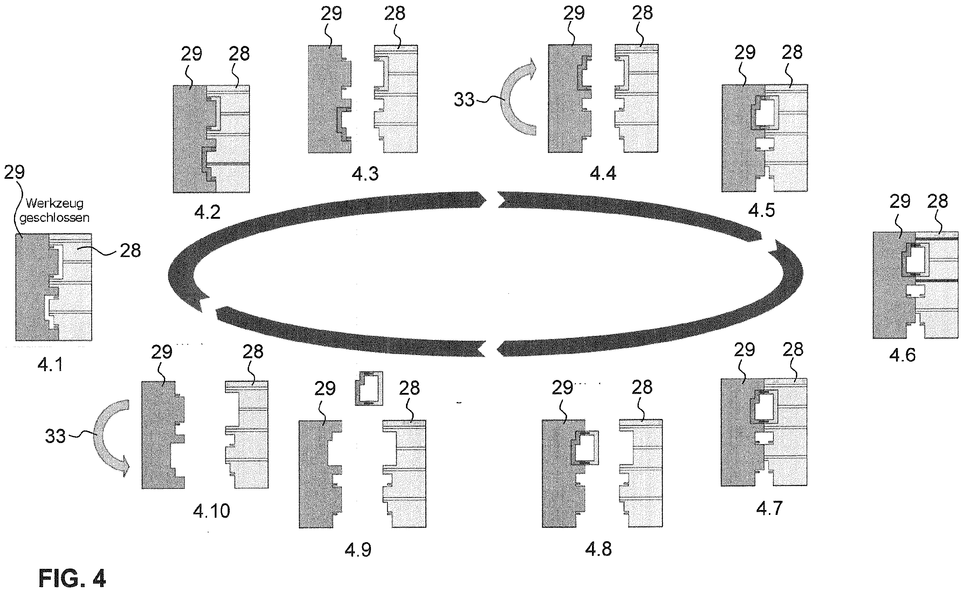

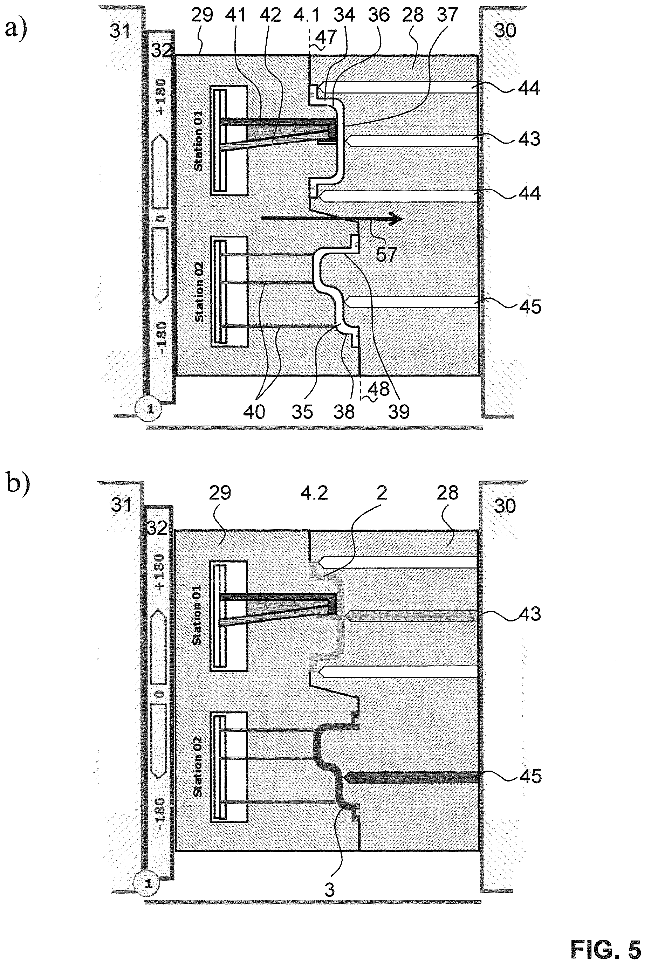

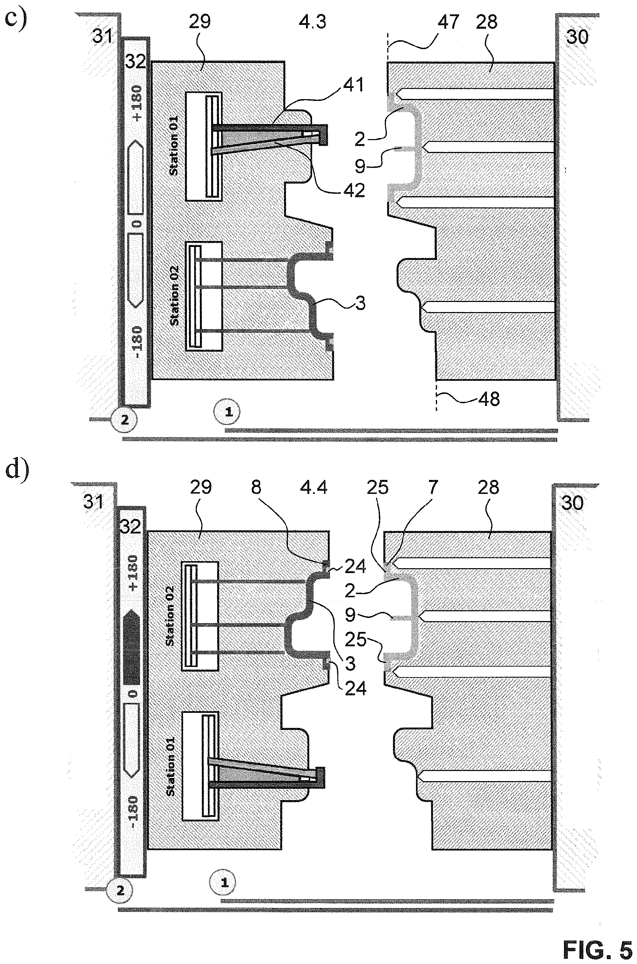

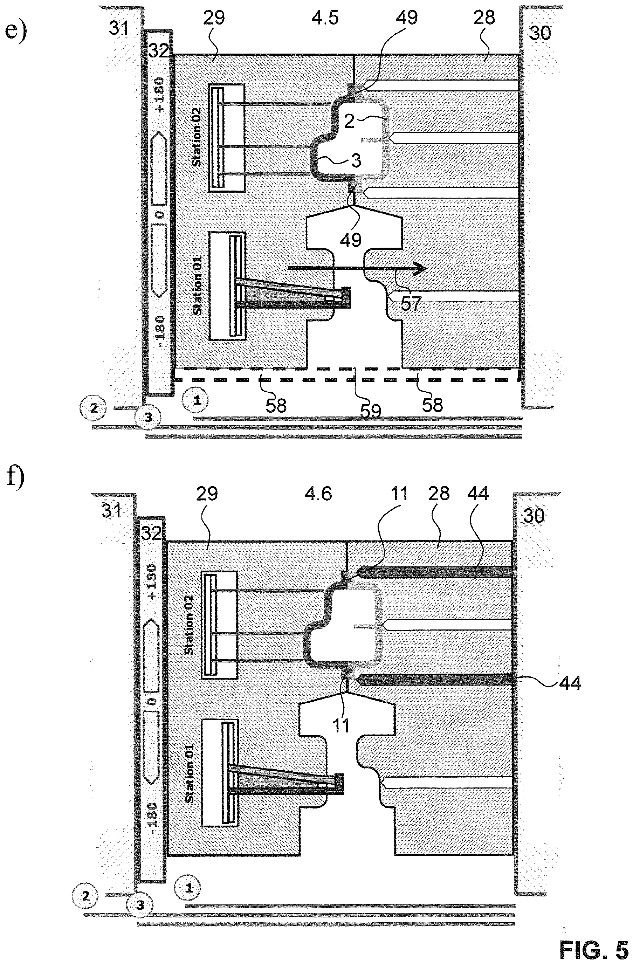

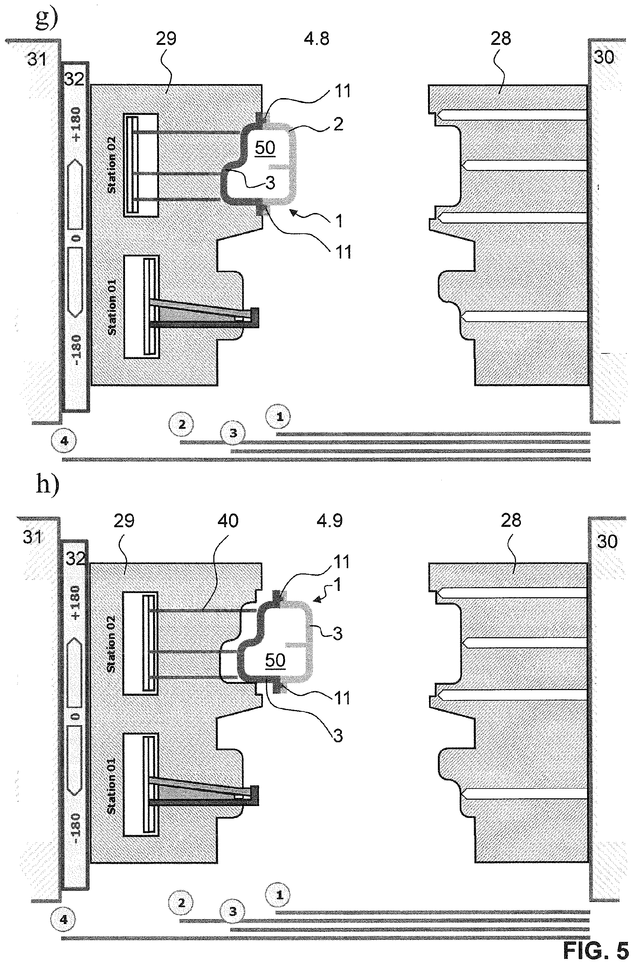

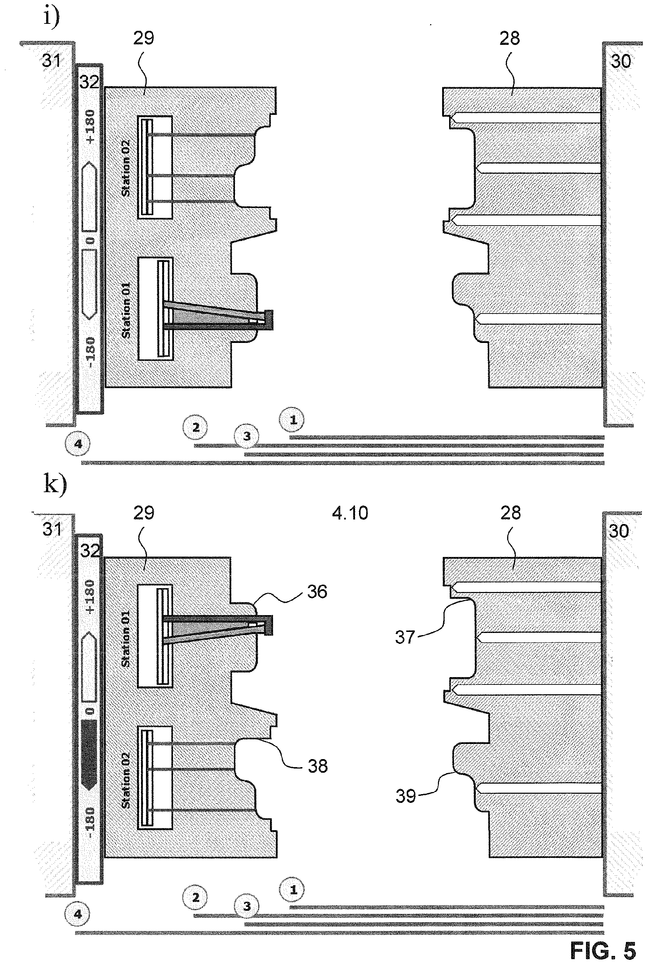

In Figur 4 ist in einer Übersichtsdarstellung der Herstellungsprozess gemäss der Erfindung dargestellt. Die einzelnen Schritte 4.1.-4.10 sind in Figur 5 in genauerem Detail dargestellt, und werden dort noch einmal diskutiert werden.

Der Prozess beginnt mit der als 4.1 dargestellten geschlossenen Form. Die Form wird gebildet durch die kernseitige Form 29 und die düsenseitige Form 28. Die düsenseitige Form 28 ist stationär, hier werden die Spritzgussmaterialien zugeführt, während die kernseitige Form 29 um 180 Grad gedreht werden kann. Die geschlossene Form 4.1 stellt oben die Kavität für die Oberschale 2 bereit und unten die Kavität für die Unterschale 3. Wie in anfolgenden Zustand 4.2 dargestellt, wird nun in einem ersten Schritt in diese geschlossene Form das Spritzgussmaterial für Oberschale respektive Unterschale eingeführt und entsprechend die obere und die untere Kavität gefüllt. In diesem 1. Schritt werden also individuell Oberschale und Unterschale in einem Spritzgussprozess in einer einzigen Form gefertigt.

Nach Auskühlen der Form wird die Form geöffnet, wobei durch entsprechende Ausbildung von Hinterschnitten in den Kavitäten und/oder durch Auswerfer gewährleistet wird, dass die Oberschale 2 in der düsenseitigen Form verbleibt und die Unterschale 3 in der kernseitigen Form 29. Die offene Form ist in 4.3 dargestellt.

Nun wird die linke Halbschale der Form, wie in 4.4 dargestellt, gedreht, indem die kernseitige Form 29 um 180 Grad gewendet wird, sodass nun Unterteil 3 und Oberteil 2, die gerade frisch in Schritt 4.2 gespritzt worden sind, in die korrekte, zum Schliessen vorgesehene Position gebracht werden.

Anschliessend wird die Form, wie in 4.5 dargestellt, wieder geschlossen, sodass nun die bereits oben diskutierten Flansche 7 und 8 in korrekte komplementäre dichte Anlage kommen, und sich entsprechend die Kavität in den Rinnen 24 und 25 für die auszubildende Schweissnaht bildet, und sodass nun, wie in 4.6 dargestellt, das Material für die Schweissnaht 11 in diese Kavität eingespritzt werden kann und so Oberschale 2 und Unterschale 3 miteinander verbunden werden können.

Anschliessend lässt man die Form, wie in 4.7 dargestellt, auskühlen, und dann wird, wie in 4.8 dargestellt, die Form geöffnet, wobei wiederrum gezielt vorgesehen wird, dass der fertige Behälter in der gewünschten Form, hier in der kernseitigen Form 29, erhalten wird (Hinterschnitte und/oder Auswerfer).

Anschliessend wird, wie in 4.9 dargestellt, typischerweise über einen Roboter, der fertige Behälter aus der Form entnommen und gegebenenfalls weiteren Bearbeitungsschritten unterzogen.

Anschliessend wird, wie in 4.10 dargestellt, die kernseitige Form 29 wiederum um 180 Grad zurückgedreht, und die Form wieder geschlossen, sodass man am Ende im Ursprungszustand 4.1 wiederum angekommen ist und der Prozess erneut im zyklischen Sinne durchgeführt werden kann.

Die einzelnen Schritte dieses Verfahrens sollen nun anhand der Darstellungen von Figur 5 im Detail erläutert werden.

In Figur 5a) ist der geschlossene Zustand 4.1 zu Beginn des Prozesses dargestellt. Das Werkzeug ist geschlossen, die Schliesskraft ist auf die Spritzstellung 01 ausgelegt (vgl. unterer Balken und 1 im Kreis), die Auswerferplatte der Station 1 ist eingefahren und die Auswerferplatte der Station 02 ist ebenfalls eingefahren. Der Drehteller 32, der auf der Produktionsmaschine der Kernseite auf der Aufspannplatte vorgesehen ist, ist in der 0 Grad Position. Hier ist erkennbar, wie der Bereich der kernseitigen Form, welche die Oberschale 2 ausbildet, über ein Hebesegment 41 verfügt, mit welchem die Oberschale gezielt von der kernseitigen Form 29 abgestossen werden kann. Ebenfalls ist erkennbar, wie dort ein Schrägschieber 42 angeordnet ist. Dieser Schrägschieber 42 ist dazu vorgesehen, die Ausbildung der Löcher 10 in den Schwallwänden 9 zu ermöglichen. Dies wird so getan, dass auf dem Schrägschieber 42 auf der dem Hebesegment 41 abgewandten und der dem auszubildenden Schwallwand-Segment zugewandten Oberfläche die entsprechenden Konturen für die Ausbildung der Löcher vorgesehen sind (in Form von Zapfen). So wird der Bereich 46 gewissermassen durch den Schrägschieber 42 topologisch in Bezug auf die Löcher in den Schwallwänden 9 vorgegeben. Nach dem Einspritzvorgang, wenn dann die frisch gespritzte Oberschale 2 freigeben werden soll, kann der Schrägschieber 42 etwas zum Hebesegment 41 verschoben werden, dadurch werden die zapfenförmigen Formgebungselemente auf dem Schrägschieber 42, die in die gebildeten Löcher in der entsprechenden Schwallwand 9 hineingreifen, aus diesen Löchern herausgezogen und das gebildete Formteil 2 ist freigegeben und kann dann entnommen werden. Ebenfalls erkennbar sind hier die Stiftauswerfer 40 für die Unterschale.

Zwischen der düsenseitigen Form 28 und der kernseitigen Form 29 ist im oberen Bereich die Kavität 34 für die Oberschale 2 ausgebildet. Sie wird gebildet durch die Begrenzungskontur 36 auf der kernseitigen Form und die Begrenzungskontur 37 auf der düsenseitigen Form.

Analog wird im unteren Bereich des Werkzeugs die Unterschale 3 gebildet durch die Kavität 35, welche ausgebildet wird durch die Begrenzungskontur 38 auf der kernseitigen Form und durch die Begrenzungskontur 39 auf der düsenseitigen Form.

Die Trennebene der Form ist dabei gestuft ausgebildet. Im oberen Bereich für die Herstellung der Oberschale 2 ist in dieser ersten Spritzguss-Position die Trennebene 47 weiter links angeordnet und im unteren Bereich für die Herstellung der Unterschale 3 ist die Trennebene 48 weiter rechts angeordnet. In Schliessrichtung 57 ist entsprechend die Trennebene des Bereichs für die Herstellung der Unterschale 3 weiter vorne angeordnet in der ersten Spritzguss-Position. Diese gestufte Trennebene ist dann, wenn die beiden Halbschalen 2, 3 unterschiedlich sind, wichtig, um zu verhindern, dass in der zweiten Spritzguss-Position, wie sie beispielsweise in den Figuren 5 e) und f) dargestellt sind, die nicht verwendeten Bereiche, welche die Bereiche sind, welche die konkave Innenfläche der jeweiligen Schale ausbilden, miteinander kollidieren.

Wie in Figur 5b) dargestellt als Zustand 4.2, wird nun in einem ersten Schritt, im Zustand 4.2, über die Spritzgussmaterial-Zuführung 43 die Kavität 34 für die Ausbildung der Oberschale 2 mit Spritzgussmaterial gefüllt. Gleichzeitig und parallel dazu wird über die Spritzgussmaterial-Zuführung 45 unten die Kavität 35 gefüllt und die Unterschale 3 ausgebildet.

In dieser ersten Position, die mit einer Ziffer 1 im Kreis unterhalb der Figur dargestellt ist, wird die für diesen Vorgang erforderliche Schliesskraft von beispielsweise 500-1000 t angelegt. Die die Form tragende Spritzgussmaschine sollte in der Lage sein, diese Schliesskraft bei der ersten Spritzguss-Position aufzubringen.

Anschliessend wird, wie in Figur 5c) dargestellt als Zustand 4.3, das Werkzeug geöffnet bis zur Position 2 im Kreis unten, nachdem genügend Zeit gegeben wurde, dass die neuen Formteile auskühlen, wobei zunächst aber der Schrägschieber 42 etwas nach oben verschoben wurde (Freigabe der Löcher in den Schwallwänden) und anschliessend zur Freigabe des Oberteils 2 und zur Sicherstellung, dass dieses auf der düsenseitigen Form haften bleibt, mit dem Hebesegment 41 etwas abgedrückt.

Anschliessend wird über den Drehteller 32 die kernseitige Form 29 um 180 Grad gedreht, wie dies in der Endposition dann in Figur 5d) in der Position 4.4 dargestellt ist. Nun liegen Oberschale 2 und Unterschale 3 direkt gegenüber und die beiden Flansche 7, 8 sind relativ zueinander bereits ausgerichtet und sind vorbereitet positioniert für die anschliessende flächige Anlage.

Im nächsten Schritt wird die Form geschlossen, was zum Endzustand führt, wie er in Figur 5e) als Position 4.5 dargestellt ist. In diesem Zustand, der unten durch eine 3 im Kreis angegeben ist, wird erneut, wie beim 1. Spritzgusszustand, der in Figur 5 b) dargestellt ist, eine Schliesskraft aufgebaut. Das Werkzeug muss entsprechend gebaut sein, dass es diese beiden unterschiedlichen Schliesskräfte in den unterschiedlichen Öffnungszuständen aufbauen kann. Die unterschiedlichen Positionen von 1 im Kreis und 3 im Kreis wie unten in Figur 5f) dargestellt sind erforderlich, um zu verhindern, dass die in Figur 5f unten dargestellten Konturen, die gerade nicht benutzt werden, nicht kollidieren.

Die beiden Flansche 7, 8 grenzen nun direkt und flächig kontaktierend aneinander, sodass sich in den beiden oben diskutierten umlaufenden Rinnen 24, 25 eine umlaufende Kavität 49 bildet. In diese Kavität 49 wird nun über 3-4 Spritzgussmaterialzuführungskanäle 44 direkt Material eingespritzt, sodass sich eine stoffschlüssige Verbindung, unterstützt durch eine formschlüssige Verbindung, zwischen den beiden Halbschalen bildet, und zwar durch die Schweissnaht 11. Typischerweise wird hier das gleiche Material eingespritzt wie das Material für die Halbschalen, d. h. im vorliegenden Fall HD-PE.

In dieser zweiten Position, die mit einer Ziffer 3 im Kreis unterhalb der Figur dargestellt ist, wird die für diesen Vorgang erforderliche Schliesskraft von wiederum beispielsweise 500-1000 t angelegt. Die die Form tragende Spritzgussmaschine sollte in der Lage sein, diese Schliesskraft bei der zweiten Spritzguss-Position aufzubringen, welche in Schliessrichtung auf einer anderen Höhe angeordnet ist, namentlich in diesem Fall weiter hinten in Schliessrichtung 57 betrachtet.

Wie aus Figur 5e) erkennbar ist der untere Bereich nun gewissermassen im Abstand gehalten und nicht in Kontakt. Bei den genannten Schliesskräften kann dies zu Problemen führen. Um dies zu verhindern können, wie dies schematisch in dieser Figur durch gestrichelte Erweiterungen 58 angegeben ist, an der jeweiligen Form 28 respektive 29 Abstützungen vorgesehen werden, die dann in dieser zweiten Spritzguss-Position in Anlage kommen und im unteren Bereich die Schliesskraft an der Kontaktfläche 59 aufnehmen.

Wiederum nach einer entsprechenden Abkühlzeit wird die Form erneut geöffnet, wie dies in Figur 5g) dargestellt ist als Zustand 4.8, wobei wieder durch entsprechende Hinterschnitte und/oder Auswerfer darauf geachtet wird, dass beim Öffnen der Form das nun fertige und verbundene Behälterbauteil 1 auf der kernseitigen Form 29 bleibt (kann auch gezielt auf der anderen Form verbleiben).

Anschliessend wird unter Verwendung der Stiftauswerfer 40, wie dies in Figur 5h) als Zustand 4.9 dargestellt ist, nachdem der Behälter 1 durch einen Roboter gegriffen worden ist, der Behälter aus der kernseitigen Form 29 unter Verwendung der Auswerfer 40 freigegeben und für weitere Bearbeitungsschritte oder Lagerung transportiert.

Anschliessend wird, wie in Figur 5i) dargestellt, die kernseitige Form 29 erneut um 180 Grad zurückgedreht, sodass man dann im Ursprungszustand der offenen Form landet, nachdem auch die Stiftauswerfer wieder eingefahren worden sind, das heisst, im Zustand wie er in Figur 5k) dargestellt ist, und als 4.10 bezeichnet ist. Anschliessend wird die Form wieder geschlossen und man landet bei der Situation 4.1, wie sie in Figur 5a) dargestellt ist.

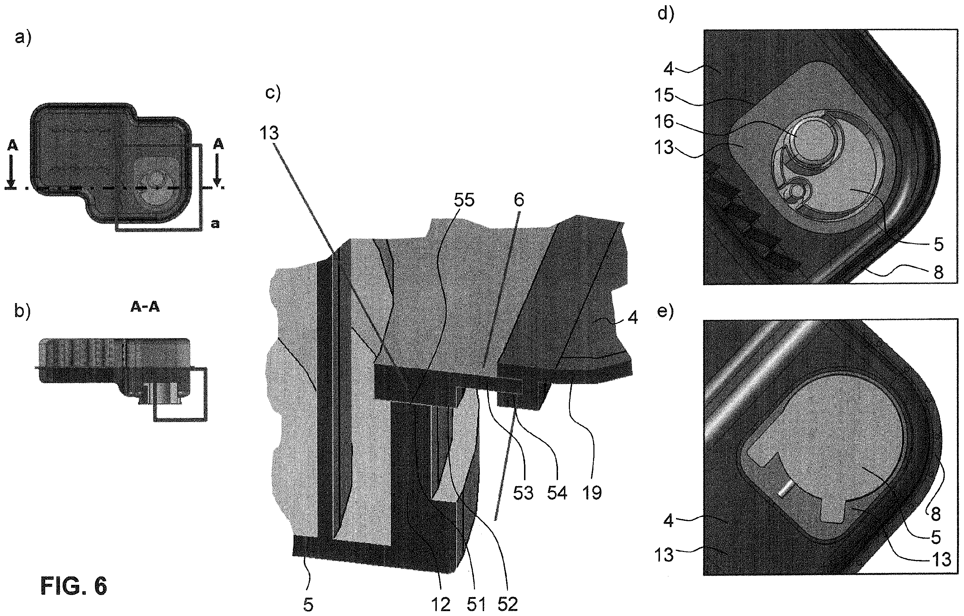

In Figur 6 ist dargestellt, wie die Dosiereinheit 5 an einen solchen Behälter 1 befestigt werden kann. Die Dosiereinheit 5 verfügt über eine umlaufende Rippe 12, welche nach oben aufragt. Diese umlaufende Rippe 12 verfügt über eine abgeflachte Oberkante 51. Die Dosiereinheit 5 wird nun Bevorzugtermassen nicht direkt am Boden angespritzt oder angeschweisst, sondern die Dosiereinheit 5 wird zunächst mit einer Adapterplatte 6 verschweisst, und zwar, indem die Unterseite 52 der Adapterplatte 6 über eine Schweissnaht 55 mit der genannten Oberkante 51 der umlaufenden Rippe 12 umlaufend verbunden wird. In einem ersten Vorbereitungsschritt wird entsprechend die Dosiereinheit 5 so stoffschlüssig fest mit der Adapterplatte 6 verbunden. Typischerweise findet die Herstellung dieser Verbindung in einem Heissspiegel-Verschweissungsverfahren statt.

Anschliessend wird diese mit der Adapterplatte 6 verbundene Dosiereinheit 5 bevorzugterweise direkt in einen entsprechenden Hohlraum in der Kontur 38 eingelegt, und anschliessend wird in einem In-Mold-Verfahren eine Randverjüngung 53 der Adapterplatte 6 direkt im Bereich 54 durch das Material der Unterschale umspritzt und so eine nachhaltig feste und dichte Verbindung zwischen Adapterplatte 6 mit der Dosiereinheit 5 am Unterteil 3 des Behälters 1 gewährleistet.

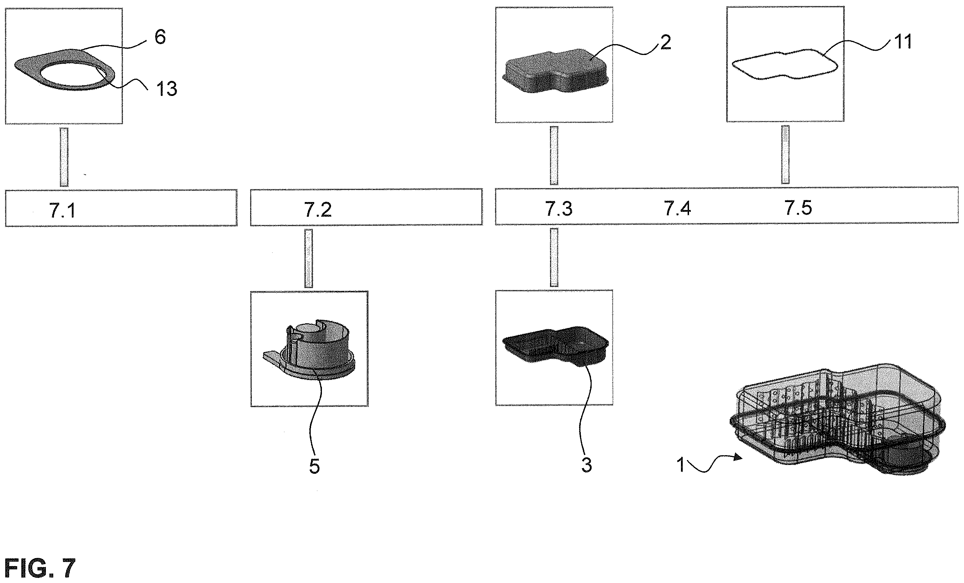

Die einzelnen Schritte, nun nicht werkzeugmässig dargestellt, sondern teilemässig, sind in Figur 7 noch einmal zusammengefasst. In einem ersten Schritt wird die Adapterplatte aus HD-PE in einem einfachen Spritzgussverfahren hergestellt, direkt mit dem Loch 13. Dies ist Schritt 7.1.

Im anfolgenden Schritt 7.2 wird die separat hergestellte Dosiereinheit 5 mit der Adapterplatte 6 in einem Heissspiegel-Verschweissungsverfahren verbunden.

Dann wird im Schritt 7.3, nachdem die Dosiereinheit 5 mit der daran befestigten Adapterplatte 6 in die Form (konkret in die Kavität 35) eingelegt worden ist, im Werkzeug, wie es in Figur 4 und 5 dargestellt ist, die Schrittabfolge durchlaufen, die in 7.3-7.5 angegeben ist, und die über die Schweissnaht 11 den geschlossenen Behälter erzeugt, wie er denn rechts unten in einer perspektivischen Darstellung angegeben ist.

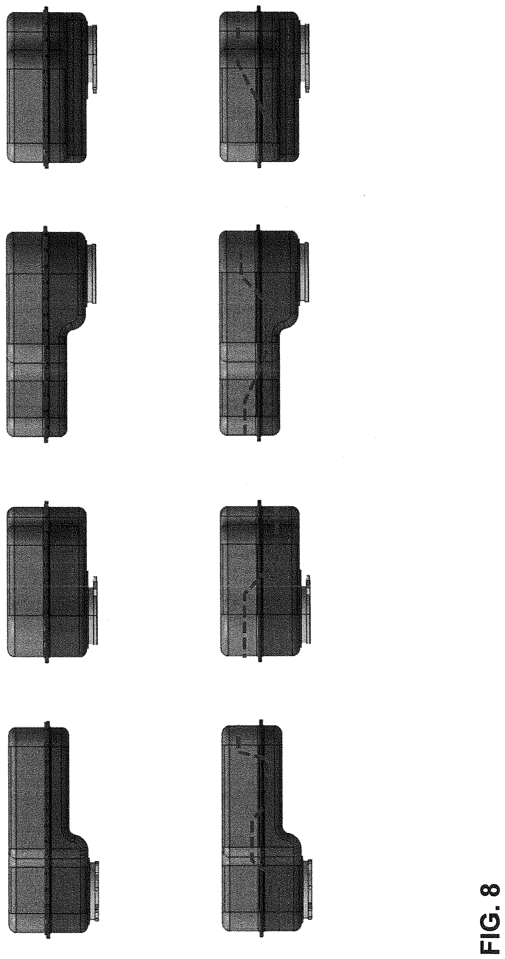

Nach dem konventionellen Verfahren werden derartige Behälter typischerweise hergestellt, in dem die Oberschale 2 und die Unterschale 3 in einem individuellen Herstellungsprozess hergestellt werden, und anschliessend werden die beiden Schalen in einem Heissspiegel-Verfahren entlang der Äquatorlinie miteinander verbunden. Dies führt dazu, dass bei diesem Verfahren im Wesentlichen nur Konstruktionen möglich sind, die, wie in Figur 8 in der oberen Reihe dargestellt, eine ebene Verbindungslinie, das heisst, in einer Ebene verlaufende Flansche von Oberteil und Unterteil aufweisen.

Ein wesentlicher Vorteil des hier vorgeschlagenen Verfahrens ist, dass diese Verbindungslinie nicht mehr gezwungenermassen als Ebene ausgebildet sein muss. Wie in der unteren Reihe von Figur 8 dargestellt, kann die Verbindungsebene verlassen werden, und es können gekrümmte und beliebig ausgestaltete Kontaktlinien zwischen Oberschale 2 und Unterschale 3 vorgesehen werden. Diese so freie Gestaltung der Kontaktlinie ermöglicht neue Funktionalitäten ohne dass, bei Verwendung des vorgeschlagenen Verfahrens, durch diese Gestaltungsfreiheit Einbussen hinsichtlich Dichtigkeit und Festigkeit in Kauf genommen werden müssen.

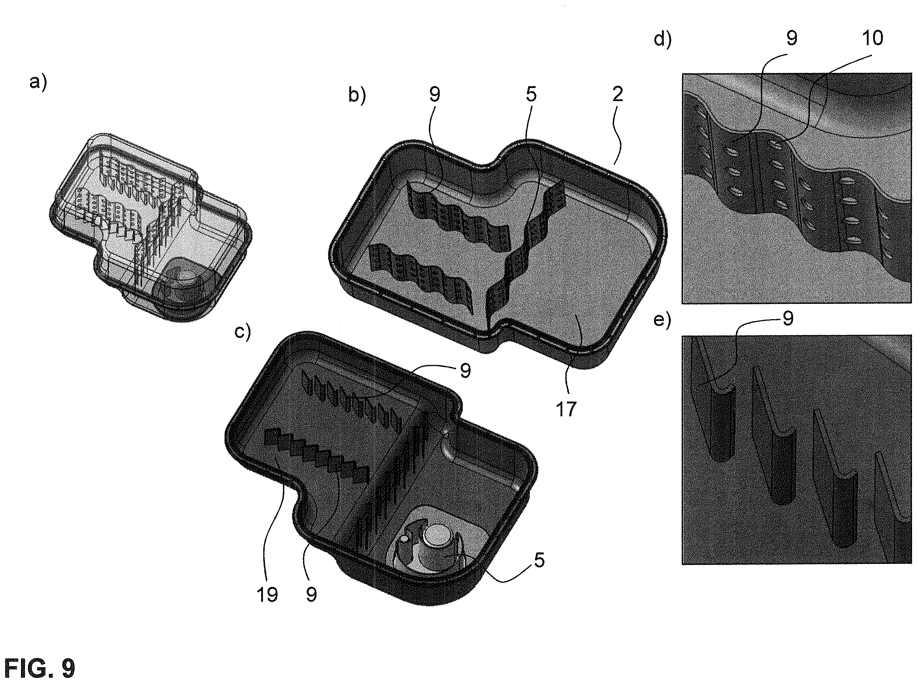

In Figur 9 sind die oben diskutierten Schwallwände 9 noch einmal im Detail dargestellt. Hier kann erkannt werden, wie sowohl in der Oberschale 2 als auch in der Unterschale 3 derartige Schwallwände 9 vorgesehen sind. Diese greifen dann im zusammengesetzten Behälter gegebenenfalls sogar ineinander im Innenraum 50 des Behälters 1. Im Fall der Schwallwände 9 in der Oberschale 2 sind diese mit den oben bereit im Detail diskutierten Löchern 10 versehen, und sind gewissermassen wellenförmig ausgebildet, was dazu führt, dass die Stabilisierungswirkung der Flüssigkeit im Behälter weiter erhöht wird, und weiterhin dazu, dass weniger Material verarbeitet werden muss (Kosten) und das ein niedrigeres Gewicht des gesamten Behälters resultiert.

**BEZUGSZEICHENLISTE**

| | | | |
|---|---|---|---|
| 1 | Behälter | 3 | Unterschale von 1 |
| 2 | Oberschale von 1 | 4 | abgesenkter Bereich von 3 |
| 5 | Dosiereinheit | 31 | Produktionsmaschine Kernseite, Aufspannplatte |
| 6 | Adapterplatte | 32 | Drehteller für 29 |
| 7 | Flansch an 2 | 33 | Drehung von 29 |
| 8 | Flansch an 3 | 34 | Kavität für 2 |
| 9 | Schwallwand | 35 | Kavität für 3 |
| 10 | Löcher in 9 | 36 | Begrenzungskontur von 34 auf 29 |
| 11 | Behälter-Schweissnaht | 37 | Begrenzungskontur von 34 auf 28 |
| 12 | umlaufende Rippe von 5 | 38 | Begrenzungskontur von 35 auf 29 |
| 13 | Loch in 6 | 39 | Begrenzungskontur von 35 auf 28 |
| 14 | Zapfen an 11 | 40 | Stiftauswerfer |
| 15 | Loch im Boden von 4 | 41 | Hebesegment |
| 16 | in den Behälter hineinragender Bereiche von 5 | 42 | Schrägschieber |
| 17 | Deckfläche von 2 | 43 | Spritzgussmaterial-Zuführung für 2 zur 34 in 28 |
| 18 | umlaufende Wand von 2 | 44 | Spritzgussmaterial-Zuführung für 11 in 28 |
| 19 | Bodenfläche von 3 | 45 | Spritzgussmaterial-Zuführung für 3 zur 35 in 28 |
| 20 | umlaufende Wand von 3 | 46 | Bereich von 34 für 9 |
| 21 | mechanische LabyrinthDichtung | 47 | Trennebene/Verschlussebene von Bereich für Oberschale von 28 |
| 22 | Kamm auf 8 | 48 | Trennebene/Verschlussebene von Bereich für Unterschale von 28 |
| 23 | Nut in 7 | 49 | zwischen 7 und 8 ausgebildete Kavität durch 24 und 25 für 11 |
| 24 | umlaufende Rinne in 8 | | |
| 25 | umlaufende Rinne in 7 | | |
| 26 | aussen liegender Kontaktbereich zwischen 7 und 8 | | |
| 27 | innenliegender Kontaktbereich zwischen 7 und 8 | | |
| 28 | düsenseitige Form | | |
| 29 | kernseitige Form | | |
| 30 | Produktionsmaschine Düsenseite, Aufspannplatte | | |
| 50 | umschlossener Hohlraum von 1 | 4.6 | Einspritzen 02, Schweissnaht |
| 51 | Oberkante von 12 | 4.7 | Kühlzeit, Werkzeug geschlossen |
| 52 | Unterseite von 13 | 4.8 | Werkzeug öffnen |
| 53 | Rand-Verjüngung von 13 | 4.9 | Bauteil Entformung |
| 54 | umspritzter Bereich | 4.10 | Werkzeug drehen -180° |
| 55 | Schweissnaht | 7.1 | Einkomponenten Spritzguss von 13 aus HD-PE |
| 56 | Trennebene zwischen 2 und 3 | 7.2 | Heisssiegel-Verschweissung von 13 mit 5 |
| 57 | Schliessrichtung | 7.3 | Einspritzen 01 gemäss 4.2, Oberschale und Unterschale aus HD-PE |
| 58 | Abstützung, Erweiterung | 7.4 | Umsetzen |
| 59 | Kontaktfläche von 58 | 7.5 | Einspritzen 02 von 11 aus HD-PE |
| 4.1 | Werkzeug geschlossen | 1 | Länge von 1 |
| 4.2 | Einspritzen 01, Oberschale/Unterschale | b | Breite von 1 |
| 4.3 | Werkzeug öffnen | h | Höhe von 1 |
| 4.4 | offenes Werkzeug mit gespritzten Schalen drehen +180° | | |
| 4.5 | Werkzeug mit gespritzten Schalen schliessen | | |

## Patentansprüche

1. Verfahren zur Herstellung eines im Wesentlichen geschlossenen Behälters (1) zur Führung und/oder Aufbewahrung von Gasen und/oder Flüssigkeiten aus einem thermoplastischen Kunststoff, wobei das Verfahren folgende Schritte aufweist:
in einer Spritzgussform mit einer ersten Form (28) und einer zweiten Form (29), welche gemeinsam einer ersten Spritzguss-Position sowohl wenigstens eine Kavität (34) für eine Oberschale (2) als auch wenigstens eine Kavität (35) für eine Unterschale (3) bereitstellt, werden parallel wenigstens eine Oberschale (2) und wenigstens eine Unterschale (3) in einem Spritzgussverfahren hergestellt;
Öffnen der Spritzgussform, wobei die wenigstens eine Oberschale (2) in der ersten Form (28) verbleibt und die wenigstens eine Unterschale (3) in der zweiten Form (29) verbleibt;
Drehen wenigstens einer der beiden Formen (29), sodass die konkaven Innenseiten der Schalen (2, 3) gegeneinander gerichtet sind und Schliessen der Form zu einer zweiten Spritzguss-Position, sodass die im Wesentlichen kongruenten Randbereiche (7, 8) der Schalen (2, 3) in wenigstens teilweise flächige Anlage kommen;
Einschiessen von Spritzgussmaterial in eine Kavität (49) zwischen oder angrenzend an die Randbereiche (7, 8) unter Ausbildung einer umlaufenden Schweissnaht (11) zwischen Oberteil (2) und Unterteil (3);
Öffnen der Spritzgussform und Entnahme des wenigstens einen Behälters, **dadurch gekennzeichnet, dass** die Position der ersten Form (28) relativ zur zweiten Form (29) in Schliessrichtung (57) betrachtet in der ersten Spritzguss-Position auf einer anderen Höhe angeordnet ist als in der zweiten Spritzguss-Position.

2. Verfahren nach Anspruch 1, **dadurch gekennzeichnet, dass** auf die Schrittfolge folgender Schritt folgt:
Drehen wenigstens einer der beiden Formen (29), sodass wiederum eine erste Spritzguss-Position eingenommen wird, welche wenigstens eine Kavität (34) für eine Oberschale (2) als auch wenigstens eine Kavität (35) für eine Unterschale (3) bereitstellt, und zyklische Wiederholung der Schrittfolge zur Herstellung einer Mehrzahl von Behältern (2),
wobei vorzugsweise die Spritzgussform zur gleichzeitigen Herstellung von einem Behälter (1) ausgelegt ist und die Drehung einer der beiden Formen (29) um 180° erfolgt, oder die Spritzgussform zur gleichzeitigen Herstellung von n Behältern ausgelegt ist, und die Drehung einer der beiden Formen (29) um einen Winkel von 360°/2n erfolgt.

3. Verfahren nach einem der vorhergehenden Ansprüche, **dadurch gekennzeichnet, dass** sowohl während der ersten Spritzguss-Position als auch während der zweiten Spritzguss-Position eine Schliesskraft im Bereich von 300-3000 t, vorzugsweise im Bereich von 400-2000 t, insbesondere im Bereich von 500-1000 t aufgebaut wird.

4. Verfahren nach einem der vorhergehenden Ansprüche, **dadurch gekennzeichnet, dass** Oberteil (2) und Unterteil (3) jeweils eine konkave Innenseite und eine konvexe Aussenseite aufweisen, und dass die Randbereiche einen umlaufenden, vorzugsweise nach aussen gerichteten Flansch (7, 8) aufweisen, und wobei in der dem jeweils anderen Flansch zugewandten Kontaktfläche wenigstens eines der Flansche, vorzugsweise beider Flansche, eine umlaufende Rinne (24, 25) vorgesehen ist, sodass sich bei flächiger Anlage der Flansche (7, 8) von Oberteil (2) und Unterteil (3) ein Hohlraum (49) bildet, in welchen im Rahmen der zweiten Spritzguss-Position thermoplastischer Kunststoff unter Ausbildung der Schweissnaht (11) eingespritzt wird.

5. Verfahren nach Anspruch 4, **dadurch gekennzeichnet, dass** die wenigstens eine Rinne (24, 25), vorzugsweise beide Rinnen, einen im wesentlichen halbkreisförmigen, rechteckigen, 3-eckigen oder trapezförmigen Querschnitt aufweisen,
und/oder dass in wenigstens einem der Flansche (7, 8), vorzugsweise in beiden Flanschen (7, 8) wenigstens eine Ausnehmung und/oder Loch, vorzugsweise eine Vielzahl von bevorzugt über den Umlauf verteilten Ausnehmungen und/oder Löchern vorgesehen ist, sodass sich eine Schweissnaht (11) mit wenigstens einem Zapfen (14) ausbildet.

6. Verfahren nach einem der vorhergehenden Ansprüche, **dadurch gekennzeichnet, dass** wenigstens eine der Formen (28, 29) so ausgebildet ist, dass sich in den Innenraum (50) des Behälters ragende Schwallwände (9) ausbilden, wobei vorzugsweise diese Schwallwände (9) Löcher (10) aufweisen, welche insbesondere vorzugsweise über wenigstens einen Schrägschieber (42) in wenigstens einer der Formen (28, 29) realisiert werden.

7. Verfahren nach Anspruch 6, **dadurch gekennzeichnet, dass** an dem wenigstens einen Schrägschieber (42) eine hervorstehende Kontur ausgebildet ist, und der Schrägschieber (42) zur Freigabe des ausgebildeten Bauteils seitlich unter Freigabe der durch die Kontur erzeugten Vertiefung oder des durch die Kontur erzeugten Loches im gespritzten Bauteil verschoben wird.

8. Verfahren nach einem der vorhergehenden Ansprüche, **dadurch gekennzeichnet, dass** ein weiteres Bauelement, vorzugsweise in Form einer Dosiereinheit (5) nach der Herstellung des Behälters (1) oder vorzugsweise während der Herstellung des Behälters (1) mit dem Behälter verbunden wird, wobei vorzugsweise diese Verbindung über eine Adapterplatte (6) erfolgt.

9. Verfahren nach Anspruch 8, **dadurch gekennzeichnet, dass** die Dosiereinheit (5) gegebenenfalls nach vorgängiger Befestigung einer Adapterplatte (6) an der Dosiereinheit (5) in die Form (28, 29) vor Einnahme der ersten Spritzguss-Position eingelegt wird, und bei Ausbildung der entsprechenden Halbschale (2, 3) mit dem Material der Halbschale unter Ausbildung einer dichten Verbindung zwischen Dosiereinheit und Halbschale respektive gegebenenfalls Adapterplatte und Halbschale umspritzt wird.

10. Verfahren nach einem der vorhergehenden Ansprüche, **dadurch gekennzeichnet, dass** es sich beim thermoplastischen Material wenigstens einer der Schalen (2, 3) und/oder der Schweissnaht (11), vorzugsweise beim thermoplastischen Material der beiden Schalen (2, 3) und der Schweissnaht (11), um ein Polyolefin-Material handelt, vorzugsweise um ein Polyolefin-Material mit hoher Dichte von vorzugsweise mindestens 0.94g/cm3 handelt, vorzugsweise um HD-PE.

11. Verfahren nach einem der vorhergehenden Ansprüche, **dadurch gekennzeichnet, dass** beim Öffnen der Spritzgussform nach der Herstellung der beiden Schalen, wobei die wenigstens eine Oberschale (2) in der ersten Form (28) verbleibt und die wenigstens eine Unterschale (3) in der zweiten Form (29) verbleibt, vorzugsweise in der jeweils konkaven Formkontur (37, 38) welche die Aussenseite der jeweiligen Halbschale (2, 3) ausbildet, und wobei vorzugsweise der Verbleib der jeweiligen Schale in der entsprechenden Form gewährleistet wird durch Auswerfer und/oder Hinterschnitte.

12. Werkzeug zur Durchführung eines Verfahrens nach einem der vorgehenden Ansprüche, wobei es eine Spritzgussform mit einer ersten Form (28) und einer zweiten Form (29) aufweist, welche gemeinsam einer ersten Spritzguss-Position mit der erforderlichen Schliesskraft sowohl wenigstens eine Kavität (34) für eine Oberschale (2) als auch wenigstens eine Kavität (35) für eine Unterschale (3) bereitstellt, und die parallele Herstellung wenigstens eine Oberschale (2) und wenigstens eine Unterschale (3) in einem Spritzgussverfahren ermöglicht;
dass die Spritzgussform anschliessend geöffnet werden kann, wobei die wenigstens eine Oberschale (2) in der ersten Form (28) verbleibt und die wenigstens eine Unterschale (3) in der zweiten Form (29) verbleibt;
das wenigstens einer der beiden Formen (29) drehbar gelagert ist, sodass die konkaven Innenseiten der Schalen (2, 3) gegeneinander gerichtet werden können und die Form anschliessend zu einer zweiten Spritzguss-Position geschlossen werden kann, sodass die im wesentlichen kongruenten Randbereiche (7, 8) der Schalen (2, 3) in wenigstens teilweise flächige Anlage kommen;
das anschliessend Spritzgussmaterial bei Anlegen der erforderlichen Schliesskraft in eine Kavität (49) zwischen oder angrenzend an die Randbereiche (7, 8) unter Ausbildung einer umlaufenden Schweissnaht (11) zwischen Oberteil (2) und Unterteil (3) eingeschossen werden kann;
dass die Spritzgussform und Entnahme des wenigstens einen Behälters wieder geöffnet werden kann, und die gedrehte Form entweder in die ursprüngliche erste Spritzguss-Position zurückgedreht oder weitergedreht werden kann **dadurch gekennzeichnet, dass** die Position der ersten Form (28) relativ zur zweiten Form (29) in Schliessrichtung (57) betrachtet in der ersten Spritzguss-Position auf einer anderen Höhe angeordnet ist als in der zweiten Spritzguss-Position, und vorzugsweise sowohl während der ersten Spritzguss-Position als auch während der zweiten Spritzguss-Position eine Schliesskraft im Bereich von 300-3000 t, vorzugsweise im Bereich von 400-2000 t, insbesondere im Bereich von 500-1000 t aufgebaut werden kann.

## Claims

1. Method for producing a substantially closed container (1) for guiding and/or storing gases and/or liquids, made of a thermoplastic material, the method comprising the following steps:
in an injection mould having a first mould (28) and a second mould (29) which together provide a first injection moulding position with both at least one cavity (34) for an upper shell (2) and at least one cavity (35) for a lower shell (3), at least one upper shell (2) and at least one lower shell (3) are produced in parallel in an injection moulding process;
opening the injection mould, the at least one upper shell (2) remaining in the first mould (28) and the at least one lower shell (3) remaining in the second mould (29);
rotating at least one of the two moulds (29) so that the concave inner sides of the shells (2, 3) are directed towards each other and closing the mould to a second injection moulding position so that the substantially congruent edge regions (7, 8) of the shells (2, 3) come into at least partially planar contact;
injecting injection moulding material into a cavity (49) between or adjacent to the edge regions (7, 8), forming a circumferential welding seam (11) between upper part (2) and lower part (3);
opening of the injection mould and removal of the at least one container,
**characterized in that** the position of the first mold (28) relative to the second mold (29) is arranged at a different height in the first injection molding position than in the second injection molding position when viewed in the closing direction (57).

2. Method according to claim 1, **characterized in that** the following step follows the sequence of steps:
rotating at least one of the two moulds (29) so that in turn a first injection moulding position is assumed which provides at least one cavity (34) for an upper shell (2) as well as at least one cavity (35) for a subshell (3), and cyclically repeating the sequence of steps for producing a plurality of containers (2),
preferably the injection mould being adapted to produce a container (1) simultaneously and one of the two moulds (29) being rotated 180°, or the injection mould being adapted to produce n containers simultaneously, and one of the two moulds (29) being rotated at an angle of 360°/2n.

3. Method according to one of the preceding claims, **characterized in that** both during the first injection moulding position and during the second injection moulding position a closing force in the range of 300-3000 t, preferably in the range of 400-2000 t, in particular in the range of 500-1000 t, is built up.

4. Method according to one of the preceding claims, **characterized in that** the upper part (2) and lower part (3) each have a concave inner side and a convex outer side, and **in that** the edge regions have a peripheral flange (7, 8), preferably directed outwards, and at least one of the flanges in the contact surface facing the respective other flange, preferably both flanges, a circumferential channel (24, 25) is provided, so that when the flanges (7, 8) of upper part (2) and lower part (3) bear flat against one another, a cavity (49) forms, into which thermoplastic plastic is injected in the frame of the second injection moulding position, forming the weld seam (11).

5. Method according to claim 4, **characterized in that** the at least one channel (24, 25), preferably both channels, have a substantially semicircular, rectangular, triangular or trapezoidal cross-section,
and/or **in that** at least one recess and/or hole, preferably in both flanges (7, 8), is provided in at least one of the flanges (7, 8), preferably a multiplicity of recesses and/or holes preferably distributed over the circulation, so that a welding seam (11) with at least one pin (14) is formed.

6. Method according to one of the preceding claims, **characterized in that** at least one of the moulds (28, 29) is designed such that surge walls (9) projecting into the interior (50) of the container form, preferably these surge walls (9) having holes (10), which in particular preferably are realised via at least one inclined slide (42) in at least one of the moulds (28, 29).

7. Method according to claim 6, **characterized in that** a protruding contour is formed on the at least one inclined slide (42), and the inclined slide (42) for releasing the formed component is displaced laterally while releasing the recess produced by the contour or the hole produced by the contour in the injection-molded component.

8. Method according to one of the preceding claims, **characterized in that** a further component, preferably in the form of a metering unit (5), is connected to the container after the manufacture of the container (1) or preferably during the manufacture of the container (1), this connection preferably being effected via an adapter plate (6).

9. Method according to claim 8, **characterized in that** the metering unit (5) is inserted into the mould (28, 29) before taking the first injection-molded position, optionally after prior attachment of an adapter plate (6) to the metering unit (5), and when the corresponding half-shell (2, 3) is formed with the material of the half-shell, forming a tight connection between the metering unit and half-shell or, as the case may be, adapter plate and half-shell.

10. Method according to one of the preceding claims, **characterized in that** the thermoplastic material of at least one of the shells (2, 3) and/or the weld (11), preferably the thermoplastic material of the two shells (2, 3) and the weld (11), is a polyolefin material, preferably a polyolefin material with a high density of preferably at least 0.94g/cm3, preferably HD-PE.

11. Method according to one of the preceding claims, **characterized in that** when the injection mold is opened after the production of the two shells, the at least one upper shell (2) remaining in the first mold (28) and the at least one lower shell (3) remaining in the second mold (29), preferably in the respective concave mold contour (37, 38) forming the outside of the respective half shell (2, 3), and preferably the remaining of the respective shell in the corresponding mold being ensured by ejector and/or undercuts.

12. Tool for carrying out a process according to one of the above claims, comprising an injection mould having a first mould (28) and a second mould (29) which, together with a first injection moulding position with the required closing force, provides both at least one cavity (34) for an upper shell (2) and at least one cavity (35) for a lower shell (3), and enables the parallel manufacture of at least one upper shell (2) and at least one lower shell (3) in an injection moulding process; in that the injection mould can then be opened, the at least one upper shell (2) remaining in the first mould (28) and the at least one lower shell (3) remaining in the second mould (29);
the at least one of the two molds (29) is rotatably mounted so that the concave inner sides of the shells (2, 3) can be directed against each other and the mold can subsequently be closed to a second injection molding position so that the substantially congruent edge regions (7, 8) of the shells (2, 3) come into at least partially planar contact;
the subsequently injection-molded material can be shot into a cavity (49) between or adjacent to the edge regions (7, 8) when the required closing force is applied, forming a circumferential weld seam (11) between upper part (2) and lower part (3);
in that the injection mould and removal of the at least one container can be opened again, and the turned mould can either be turned back to the original first injection moulding position or turned further
**characterized in that** the position of the first mould (28) relative to the second mould (29) in the closing direction (57) is arranged at a different height in the first injection moulding position than in the second injection moulding position, and preferably a closing force in the range of 300-3000 t, preferably in the range of 400-2000 t, in particular in the range of 500-1000 t can be built up both during the first injection moulding position and during the second injection moulding position.

## Revendications

1. Procédé de fabrication d'un récipient (1) essentiellement fermé pour guider et/ou conserver des gaz et/ou des liquides, en plastique thermoplastique, le procédé présentant les étapes suivantes :
dans un moule de moulage par injection avec un premier moule (28) et un deuxième moule (29), qui fournit en commun une première position de moulage par injection ainsi qu'au moins une cavité (34) pour une coque supérieure (2) et au moins une cavité (35) pour une coque inférieure (3), au moins une coque supérieure (2) et au moins une coque inférieure (3) sont fabriquées en parallèle dans un procédé de moulage par injection ;
ouverture du moule de moulage par injection, l'au moins une coque supérieure (2) restant dans le premier moule (28) et l'au moins une coque inférieure (3) restant dans le deuxième moule (29) ;
rotation d'au moins l'un des deux moules (29) de telle sorte que les côtés intérieurs concaves des coques (2, 3) soient orientés l'un vers l'autre et
fermeture du moule pour obtenir une deuxième position de moulage par injection de telle sorte que les régions de bord essentiellement coïncidentes (7, 8) des coques (2, 3) viennent au moins en partie en appui à plat ;
introduction de matière de moulage par injection dans une cavité (49) entre les régions de bord (7, 8) ou à côté de celles-ci en formant un joint de soudure périphérique (11) entre la partie supérieure (2) et la partie inférieure (3) ;
ouverture du moule de moulage par injection et enlèvement de l'au moins un récipient,
**caractérisé en ce que** la position du premier moule (28) par rapport au deuxième moule (29), vue dans la direction de fermeture (57), est disposée dans la première position de moulage par injection à une hauteur différente de celle dans la deuxième position de moulage par injection.

2. Procédé selon la revendication 1, **caractérisé en ce que**, dans la succession d'étapes, l'étape suivante est ensuite réalisée :
rotation d'au moins l'un des deux moules (29) de telle sorte qu'une première position de moulage par injection soit à nouveau adoptée, laquelle fournit au moins une cavité (34) pour une coque supérieure (2) ainsi qu'au moins une cavité (35) pour une coque inférieure (3), et répétition cyclique de la séquence d'étapes pour fabriquer une pluralité de récipients (2),
le moule de moulage par injection étant de préférence conçu pour une fabrication simultanée d'un récipient (1) et la rotation de l'un des deux moules (29) étant effectuée sur 180°, ou bien le moule de moulage par injection étant conçu pour une fabrication simultanée de n récipients, et la rotation de l'un des deux moules (29) étant effectuée sur un angle de 360°/2n.

3. Procédé selon l'une quelconque des revendications précédentes, **caractérisé en ce qu'**à la fois pendant la première position de moulage par injection et pendant la deuxième position de moulage par injection, une force de fermeture de l'ordre de 300-3000 t, de préférence de l'ordre de 400-2000 t, en particulier de l'ordre de 500-1000 t est appliquée.

4. Procédé selon l'une quelconque des revendications précédentes, **caractérisé en ce que** la partie supérieure (2) et la partie inférieure (3) présentent à chaque fois un côté intérieur concave et un côté extérieur convexe, et **en ce que** les régions de bord présentent une bride périphérique (7, 8), de préférence orientée vers l'extérieur, et dans la surface de contact tournée vers l'autre bride respective, d'au moins l'une des brides, de préférence des deux brides, est prévue une rigole périphérique (24, 25) de telle sorte que lors de d'une application à plat des brides (7, 8) de la partie supérieure (2) et de la partie inférieure (3), il se forme une cavité (49) dans laquelle, dans le cadre de la deuxième position de moulage par injection, est injecté un plastique thermoplastique en formant le joint de soudure (11).

5. Procédé selon la revendication 4, **caractérisé en ce que** l'au moins une rigole (24, 25), de préférence les deux rigoles, présentent une section transversale essentiellement semi-circulaire, rectangulaire, triangulaire ou trapézoïdale, et/ou **en ce que** dans au moins l'une des brides (7, 8), de préférence dans les deux brides (7, 8), est prévu un évidement et/ou un trou, de préférence une pluralité d'évidements et/ou de trous répartis de préférence sur la périphérie, de telle sorte qu'il se forme un joint de soudure (11) avec au moins un tourillon (14).

6. Procédé selon l'une quelconque des revendications précédentes, **caractérisé en ce qu'**au moins l'un des moules (28, 29) est réalisé de telle sorte qu'il se forme des parois de déflection (9) faisant saillie dans l'espace interne (50) du récipient, ces parois de déflection (9) présentant de préférence des trous (10) qui sont réalisés dans au moins l'un des moules (28, 29), notamment de préférence par le biais d'un coulisseau incliné (42).

7. Procédé selon la revendication 6, **caractérisé en ce qu'**un contour saillant est réalisé au niveau de l'au moins un coulisseau incliné (42), et le coulisseau incliné (42) est déplacé latéralement dans le composant moulé pour libérer le composant réalisé, en libérant le renfoncement produit par le contour ou le trou produit par le contour.

8. Procédé selon l'une quelconque des revendications précédentes, **caractérisé en ce qu'**un élément structurel supplémentaire, de préférence sous forme d'une unité de dosage (5), est connecté au récipient après la fabrication du récipient (1) ou de préférence pendant la fabrication du récipient (1), de préférence cette connexion s'effectuant par le biais d'une plaque d'adaptateur (6).

9. Procédé selon la revendication 8, **caractérisé en ce que** l'unité de dosage (5), éventuellement après la fixation préalable d'une plaque d'adaptateur (6) à l'unité de dosage (5), est insérée dans le moule (28, 29) avant d'adopter la première position de moulage par injection, et lors de la réalisation de la demi-coque correspondante (2, 3), est surmoulée avec le matériau de la demi-coque en formant une connexion étanche entre l'unité de dosage et la demi-coque respectivement éventuellement entre la plaque d'adaptateur et la demi-coque.

10. Procédé selon l'une quelconque des revendications précédentes, **caractérisé en ce que** la matière thermoplastique d'au moins l'une des coques (2, 3) et/ou du joint de soudure (11), de préférence la matière thermoplastique des deux coques (2, 3) et du joint de soudure (11) est un matériau à base de polyoléfine, de préférence un matériau à base de polyoléfine ayant une grande densité, de préférence d'au moins 0,94 g/cm³, de préférence de HDPE.

11. Procédé selon l'une quelconque des revendications précédentes, **caractérisé en ce que** lors de l'ouverture du moule de moulage par injection après la fabrication des deux coques, l'au moins une coque supérieure (2) restant dans le premier moule (28) et l'au moins une coque inférieure (3) restant dans le deuxième moule (29), de préférence dans le contour de moule concave respectif (37, 38) qui constitue le côté extérieur de la demi-coque respective (2, 3), et de préférence le maintien de la coque respective dans le moule correspondant étant assuré par des éléments d'extraction et/ou des contre-dépouilles.

12. Outil pour mettre en oeuvre un procédé selon l'une quelconque des revendications précédentes, présentant un moule de moulage par injection comprenant un premier moule (28) et un deuxième moule (29), qui fournit en commun une première position de moulage par injection avec la force de fermeture nécessaire ainsi qu'au moins une cavité (34) pour une coque supérieure (2) ainsi qu'au moins une cavité (35) pour une coque inférieure (3), et permet la fabrication en parallèle d'au moins une coque supérieure (2) et d'au moins une coque inférieure (3) dans un procédé de moulage par injection ;
en ce que le moule de moulage par injection peut ensuite être ouvert, l'au moins une coque supérieure (2) restant dans le premier moule (28) et l'au moins une coque inférieure (3) restant dans le deuxième moule (29) ;
le au moins un des deux moules (29) est supporté de manière rotative de telle sorte que les côtés intérieurs concaves des coques (2, 3) puissent être orientés l'un vers l'autre et que le moule puisse ensuite être fermé dans une deuxième position de moulage par injection, de telle sorte que les régions de bord essentiellement coïncidentes (7, 8) des coques (2, 3) viennent au moins en partie en appui à plat ;
en ce qu'ensuite une matière de moulage par injection peut être introduite lors de l'application de la force de fermeture requise dans une cavité (49) entre les régions de bord (7, 8) ou à côté de celles-ci en formant un joint de soudure périphérique (11) entre la partie supérieure (2) et la partie inférieure (3) ;
en ce que pour l'enlèvement de l'au moins un récipient le moule de moulage par injection peut à nouveau être ouvert et le moule tourné peut être tourné en arrière ou en avant pour le ramener dans la première position initiale de moulage par injection,
**caractérisé en ce que** la position du premier moule (28) par rapport au deuxième moule (29), vu dans la direction de fermeture (57), est disposée dans la première position de moulage par injection à une hauteur différente de celle dans la deuxième position de moulage par injection et de préférence à la fois pendant la première position de moulage par injection et également pendant la deuxième position de moulage par injection, une force de fermeture de l'ordre de 300-3000 t, de préférence de l'ordre de 400-2000 t, en particulier de l'ordre de 500-1000 t peut être appliquée.
